(19) Europäisches Patentamt
European Patent Office
Office européen des brevets

(11) **EP 3 337 116 B1**

(12) **EUROPEAN PATENT SPECIFICATION**

(45) Date of publication and mention
of the grant of the patent:
**06.11.2019 Bulletin 2019/45**

(51) Int Cl.:
***H04L 27/26*** *(2006.01)*

(21) Application number: **16306693.9**

(22) Date of filing: **15.12.2016**

(54) **COMBINING SMALLER FFTS TO RECEIVE SIGNAL MODULATED BY LARGER IFFT**

OFDM-DEMODULATOR UND VERFAHREN ZUM BETREIBEN EINES OFDM-DEMODULATORS

DÉMODULATEUR OFDM ET PROCÉDÉ DE FONCTIONNEMENT D'UN DÉMODULATEUR OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2018 Bulletin 2018/25**

(73) Proprietor: **Alcatel Lucent
91620 Nozay (FR)**

(72) Inventors:
• **Rheinschmitt, Rupert
70435 Stuttgart (DE)**
• **Fuchs, Rolf
70435 Stuttgart (DE)**

(74) Representative: **DREISS Patentanwälte PartG
mbB
Friedrichstraße 6
70174 Stuttgart (DE)**

(56) References cited:
• **Fabrizio Tomatis ET AL: "7. Synchronization and
Cell Search" In: "LTE- The UMTS Long Term
Evolution", 17 February 2009 (2009-02-17), John
Wiley & Sons, Ltd, Chichester, UK, XP055064038,
ISBN: 978-0-47-069716-0 pages 142-157, DOI:
10.1002/9780470742891.ch7, * page 144 ***
• **Stefania Sesia ET AL: "19. Random Access" In:
"LTE - the UMTS long term evolution : from theory
to practice ; [Including release 10 for
LTE-advanced]", 17 February 2009 (2009-02-17),
Wiley, Chichester, XP055329751, ISBN:
978-0-470-66025-6 pages 371-406, DOI:
10.1002/9780470978504.ch17, * paragraph
[19.5.2.1] ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Specification**

**Field of the invention**

The present disclosure is directed to an OFDM-demodulator, and a method to operate an OFDM-demodulator.

**Background**

Evolving radio communications standards like 5G permit an efficient multi-cell / multi-TP (transmission point) support of mixed numerologies, namely mixed carrier configurations. 5G in general and specifically 3GPP New Radio targets multi-service support within one carrier. As the different service use cases are very different from each other, they motivate different multi-carrier waveform parameters each. The textbook "LTE - the UMTS long term evolution : from theory to practice ; [Including release 10 for LTE-advanced]" by Stefania Sesia ET AL discloses conventional PRACH reception. The signal is frequency shifted in the time domain, so that it covers the subcarriers on which the PRACH is modulated and then downsampled, so that the symbol length fits into a smaller FFT.

**Summary**

An object of the disclosure is to propose an OFDM-demodulator for operating in a device of a radio communications network, wherein the OFDM-demodulator comprises a processor and a memory being configured to: receive a down-converted sample stream; determine at least a first and second ingress sample stream of the down-converted sample stream of same block length and of different frequency offsets, respectively; determine a first and second forward Fast Fourier Transform of the same block length in dependence on the first and second ingress sample stream, respectively; determine a first and second egress sample stream in dependence on the first and second forward Fast Fourier Transform, respectively; and determine a synchronization sequence in dependence on the first and second egress sample stream.

This allows synchronizing the OFDM-demodulator and the corresponding radio device to a synchronization signal of a radio cell, wherein the synchronization signal has been modulated with a larger inverse FFT block length as the block length of the forward FFT which is used to determine the synchronization sequence at the side of the OFDM-demodulator. Therefore, a reduced set of FFTs in the sense of providing only small FFT block lengths is provided in the proposed OFDM-demodulator. The energy consumption and complexity of the OFDM-demodulator can be drastically reduced and at the same time latency induced by modulation/demodulation benefits by a reduced FFT block length. Therefore, cheap and energy-saving machine-type radio devices and intelligent sensor radio devices are able access a cellular radio communications network.

According to an advantageous embodiment the determination of the synchronization sequence comprises: determining a component of the synchronization sequence from a fixed position in the egress sample stream, respectively; and determining the synchronization sequence by concatenating the components of the synchronization sequence. A simple determination is therefore provided.

According to an advantageous embodiment the received down-converted ingress symbol stream comprises a synchronization signal which has been modulated with a main block length, wherein the same block length of the first and second forward Fast Fourier Transforms multiplied with an integer factor equals the main block length. Consequently, radio devices comprising a reduced set of forward FFTs in the sense of a reduced block length can be operated in a cell providing the synchronisation signal modulated with the main block length.

According to an advantageous embodiment the main block length equals 2048. This and advantageous embodiment allows to operate the OFDM-demodulator and the corresponding device in an LTE/4G radio communications network.

According to an advantageous embodiment the same block length equals 128, wherein the synchronization sequence comprises 62 synchronization symbols. Advantageously, a synchronisation sequence according to 3GPP 36.211 section 6.11 can be reconstructed and used for synchronisation.

According to an advantageous embodiment the processor and the memory are further configured to: determine a successful detection of the synchronization sequence; receive the down-converted sample stream comprising first and second control or payload data; determine at least a third and fourth ingress sample stream of the down-converted sample stream of same block length and of different further frequency offsets, respectively; determine a third and fourth forward Fast Fourier Transform of the same block length in dependence on the third and fourth ingress sample stream, respectively; determine a third and fourth egress sample stream in dependence on the third and fourth forward Fast Fourier Transform, respectively; and determine first and second control or payload data in dependence on the third and fourth egress sample stream, respectively. This advantageously allows the reuse of the respective FFT blocks after a synchronized state has been reached. Hardware complexity and resulting costs are reduced.

Another aspect of the present disclosure relates to a method to operate an OFDM-demodulator.

**Brief description of the figures**

Figure 1a, 3, 4 and 5 show a schematic block diagram of an OFDM-demodulator, respectively;
Figures 1b shows a schematic sequence diagram, respectively; and
Figure 2 shows a schematic cellular radio communications network.

**Description of the embodiments**

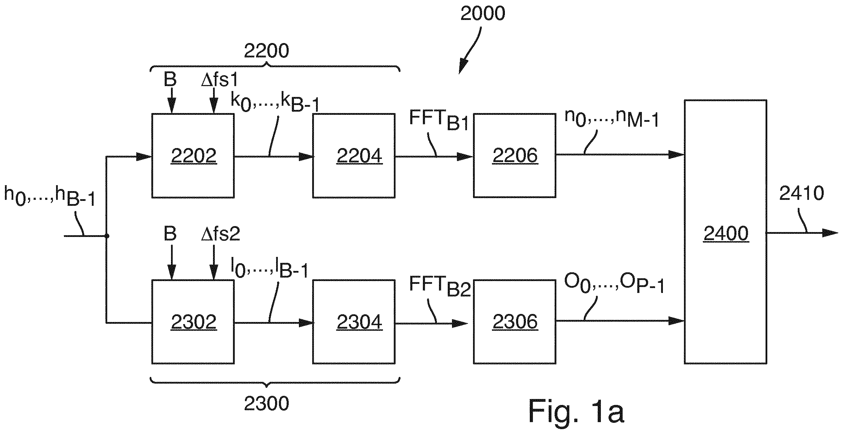

Figure 1a shows a schematic block diagram of an OFDM-demodulator 2000. A down-converted sample stream $h_0,...,h_{B-1},...$ is received from an A/D-converter of the respective radio module R2. A block 2202 of a first processing chain 2200 determines a first ingress sample stream $k_0,...,k_{B-1}$ of the first block length B in dependence on the down-converted sample stream $h_0,...,h_{B-1},...$ and in dependence on a first synchronization frequency offset $\Delta fs1$ to a subcarrier frequency, wherein the first ingress sample stream $k_0,...,k_{B-1}$ is shifted in frequency by the synchronization frequency offset $\Delta fs1$. A block 2204 determines a first forward Fast Fourier Transform $FFT_{B1}$ of the first block length B in dependence on the first ingress sample stream $k_0,...,k_{B-1}$. A block 2206 determines a first egress sample stream $n_0,...,n_{M-1}$ in dependence on the first forward Fast Fourier Transform $FFT_{B1}$.

The wording ingress and egress have the following meaning: The ingress symbol stream, for example the ingress modulation-symbol stream, is located toward an input side of the respective processing entity, for example a processing chain. The egress symbol stream is located toward an output side of the processing entity, for example a processing chain. Therefore, the ingress symbol stream may differ from an actual input symbol stream at the beginning of the processing chain. The same applies to the egress symbol stream.

Moreover the wording block length of a Fourier Transform can be used interchangeably with the wording length of a Fourier Transform or FFT length or IFFT length.

A block 2302 of a second processing chain 2300 determines a second ingress sample stream $l_0,...,l_{B-1}$ in dependence on the down-converted sample stream $h_0,...,h_{B-1},...$ of the first block length B and in dependence on a second synchronization frequency offset $\Delta fs2$ to the subcarrier frequency, wherein the second ingress sample stream $l_0,...,l_{B-1}$ is shifted in frequency by the second synchronization frequency offset $\Delta fs2$. A block 2304 determines a second forward Fast Fourier Transform $FFT_{B2}$ of the first block length B in dependence on the second ingress sample stream $l_0,...,l_{B-1}$. A block 2306 determines a second egress sample stream $o_0,...,o_{P-1}$ in dependence on the second forward Fast Fourier Transform $FFT_{B2}$.

A block 2400 determines a synchronization sequence SS or at least a part thereof in dependence on the first egress sample stream $n_0,...,n_{M-1}$ and the second egress sample stream $o_0,...,o_{P-1}$.

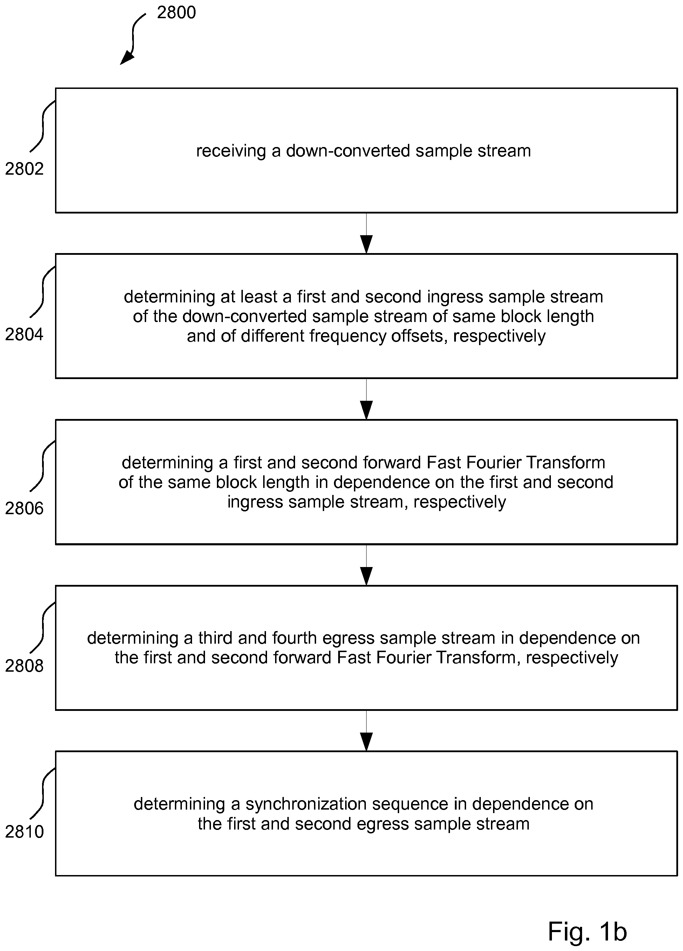

Figure 1b shows a schematic sequence diagram 2800 to operate an OFDM-demodulator 2000 comprising steps 2802, 2804, 2806, 2808 and 2010.

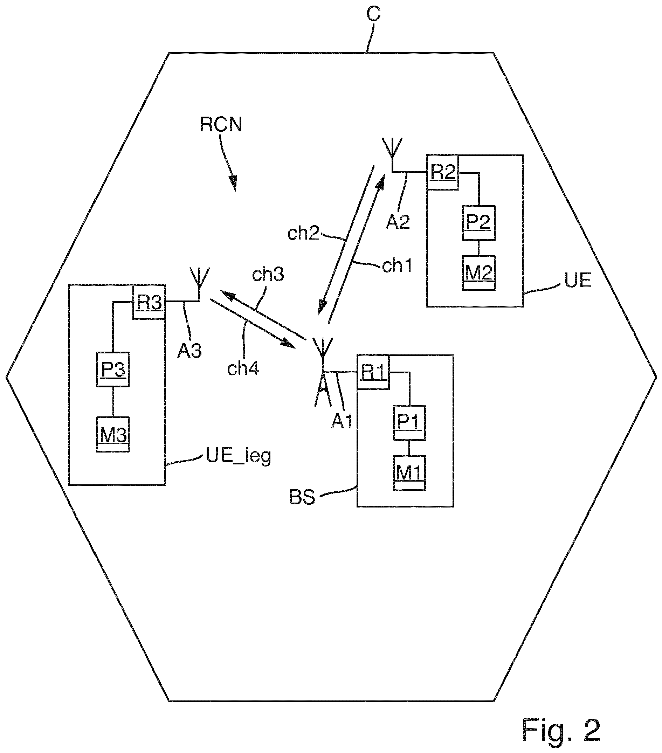

Figure 2 shows a schematic cellular radio communications network RCN. The cellular radio communications network RCN is a cellular network, wherein the first radio device BS establishes a radio cell C. The first radio device BS is a base station, a LTE eNodeB, a 5G transmission point, a WiFi access point, a remote radio head, RRH, or else. The first radio device BS is in particular suitable to serve the radio cell C and to connect user equipment in the sense of radio devices UE, UE_leg inside the radio cell C to the cellular radio communications network RCN. The first radio device BS is e.g. implemented as a stand-alone equipment. The second and third radio devices UE, UE_leg reside in the radio cell C and may be referred to as user equipment or machine equipment.

The third radio device UE_leg is a LTE legacy device and fulfils 3GPP TS36.211 V14.00 Sep.2016. The first and second radio devices BS and UE comprise an OFDM-modulator 1000 and/or an OFDM-demodulator 2000, respectively. Many of the embodiments of this description allow operating the third radio device UE_leg in the cell C together with the first and second radio devices BS and UE.

The first radio device BS comprises a memory M1, a processor P1, a radio module R1, and an antenna A1. The second radio device UE comprises a memory M2, the processor P2, a radio module R2, and an antenna A2. The third radio device UE_leg comprises a memory and 3, processor P3, a radio module are 3 and an antenna A1. The processors P1, P2, P3 are implemented using e.g. a DSP, FPGA, or the like or a combination thereof. The memory M1, M2, M3 is implemented using e.g. a RAM, ROM, DDR, Flash memory, or the like, or a combination thereof. The memory M1, M2, M3 stores e.g. computer readable instructions, thus instructions executable by the processor P1, P2, P3. The processor P1 processes data to be transmitted to the first and second radio device UE, UE_leg. The processing includes the steps necessary to fulfil the requirements set by the radio communications network RCN.

At least parts of the above described cellular radio communications network RCN including sender and/or receiver of the first radio device BS could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific base station, eNodeB, network node, MME (Mobility Management Entity) and/or UE function.

The methods described herein relate to digital signal processing and could thus be implemented using a processor like a digital signal processor, or the like. At least some of the functions relate to baseband processing and could thus be implemented using a transceiver, e.g. a baseband transceiver. The radio module is e.g. a radio module, or a remotely located so called RRH (Remote Radio Head). The constellation with a RRH is often used in connection with a so called NFV (Network Functions Virtualization) implementation, where a substantial part of processing is centralized in a server farm with a plurality of processors and a plurality of memory, and the radio specific up-conversion, the antenna and the digital-to-analog converter for data transmission in downlink to the user equipment and the analog-to-digital converter for receiving data from the user equipment in uplink is remotely located. The radio module is also called radio frontend and includes e.g. a digital-to-analog converter, a low-pass filter, a mixer, a local oscillator, a power amplifier and an antenna. The local oscillator generates the radio frequency which is mixed on the processed data. The aforementioned modules/functions could be placed in serial order. Some modules might be not be used or replaced by others dependent on the technology used. For MIMO or massive MIMO some modules need to be duplicated, e.g. a plurality of antennas is used instead of one and corresponding amplifiers, etc. Additional modules might be added for performing und/or supporting specific functions as e.g. beamforming, CoMP (coordinated multipoint), eICIC (enhanced inter-cell interference control), or the like. User equipment (UE) could be implemented as a device with a radio module, e.g. smartphone, tablet, smartwatch, sensor, actuator, equipment inside a vehicle, machine-to-machine equipment, or else. The radio communications network RCN is an OFDM (Orthogonal Frequency Division Multiplex) type network, e.g. UF-OFDM, F-OFDM, ZT-s-OFDM, P-OFDM, FC-OFDM, or another multi-carrier network, e.g. FS-FBMC, QAM-FBMC, etc. E.g. QAM - Quadrature Amplitude Modulation and/or QPSK - Quadrature Phase Shift Keying are used as modulation technique. The radio network RCN allocates resources using a scheduler and a time-frequency-resource grid, a t-f-resource. The t-f-resource includes time slots and associated subcarriers. The subcarriers are e.g. grouped in frequency subbands. A subband is assigned at least one subband parameter. A subband parameter is e.g. subcarrier spacing, other parameters are e.g. symbol duration, time overhead, time overhead type like zero postfix or cyclic prefix, windowing or filtering parameters. Dependent on the assigned or selected parameters the subband is characterized for a specific transmission type and is in particular suitable for the transmission of specific services. A service is e.g. eMBB (enhanced mobile broadband), mMTC (massive machine-type-communication), URLLC (ultra reliable low latency communication), vehicle-to-vehicle communication, voice, video, etc. An allocated physical resource block thus assigns a dedicated time slot associated with one or more subcarriers or a subband to a data packet. A physical resource block assigns one time slot to a subcarrier. A time slot is e.g. called a TTI (transmission time interval). The period of time could e.g. be one or more time slots. Data and control signals are transmitted using physical channels, e.g. physical downlink shared channel, physical downlink control channel, common control physical channel. Further data and control signals could be transmitted using broadcast channel, paging channel, multicast channel.

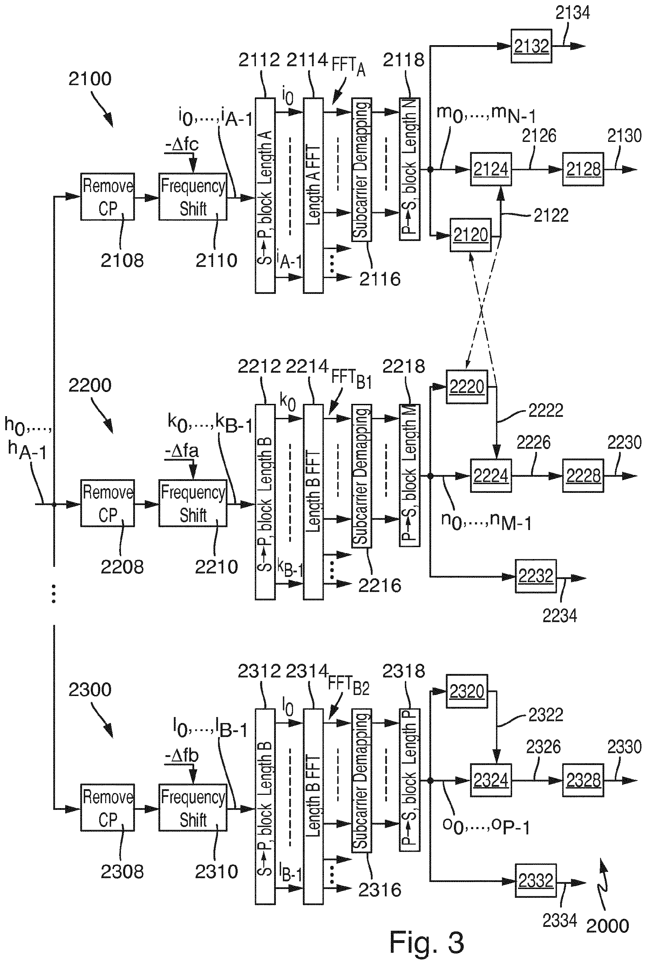

Figure 3 shows a schematic block diagram of an OFDM-demodulator 2000 with a plurality of processing chains 2100, 2200, 2300. Of course, further processing chains are possible. The processing chain 2100 is described in detail in the following, wherein the further processing chains are similar to the processing chain 2100. A cyclic prefix remover 2108 removes a cyclic prefix CP. The cyclic prefix remover 2108 can also be omitted. The frequency shifter 2110 back-shifts the down-converted sample stream $h_0,...,h_{A-1},...$ not comprising the cyclic prefix in dependence on the supplied third frequency offset $\Delta fc$. The frequency shifter 2110 determines the third ingress sample stream $i_0,...,i_{A-1}$, which is parallelised by a serial-to-parallel converter 2112. A forward Fast Fourier Transform block 2114 determines the third forward Fast Fourier Transform $FFT_A$ of the further block size A in dependence on the parallelised ingress sample stream $i_0,...,i_{A-1}$. A demapper 2116 demaps the subcarriers. A parallel-to-serial converter 2118 of block length N determines the third egress sample stream $m_0,...,m_{N-1}$ in dependence on the third forward Fast Fourier Transform $FFT_A$. A channel estimator 2120 determines a channel estimate 2122 in dependence on reference symbols contained in the third egress sample stream $m_0,...,m_{N-1}$. An equalizer 2124 determines an equalized egress modulation-symbol stream 2126 in dependence on the third egress sample stream $m_0,...,m_{N-1}$ and in dependence on the channel estimate 2122. As indicated with arrows the channel estimates 2122 and 2222 can be exchanged, wherein for example the estimator 2120 receives the channel estimate 2222. A block 2128 determines an egress data stream 2130 in dependence on the equalized egress sample stream 2126. The channel estimator 2120 and the equalizer 2124 are only exemplary and may comprise other taps regarding the respective input and output symbol streams. The block 2128 comprises a QAM-demodulator (Quadrature Amplitude Modulation) and/or a QPSK-demodulator (Quadrature Phase Shift Keying), a channel de-coder, and/or further processing entities. The egress data stream 2130 equals an ingress data stream at the side of the transmitter. A correlator 2132 detects a synchronization symbol in the third egress sample stream $m_0,...,m_{N-1}$ and determines a synchronization state 2134. The synchronization symbol comprises a CAZAC symbol. Therefore, the output of the OFDM-demodulator comprises modulation symbols and CAZAC symbols.

The processing chains 2200, 2300 differ from the processing chain 2100 as described above in the following: The egress data streams 2130 and 2230 and 2330 are mutually different with respect to their contents. The block length B of the first and second forward Fast Fourier Transform $FFT_{B1}$, $FFT_{B2}$ multiplied with the K-factor equal a main block length A. According to an embodiment the OFDM-demodulator 2000 comprises only processing chains operating with a block length smaller than the main block length A, therefore not comprising a processing chain operating with the main block length A.

Given the largest block length of the fourier transform in the sense of the main block length A, each processing chain has to fulfil the following equation (1) with a block length bl and the corresponding K-factor K.

$$bl * K = A \qquad (1)$$

For cellular radio communications network RCN with the main block length A of 2048 also legacy LTE devices can be attended. In this case the subcarrier spacing f0 providing a fixed subcarrier spacing grid for all of the other processing chains is 15 kHz. Of course, the main block length A can be chosen differently, however loosing compatibility with legacy LTE devices. The sample time Ts for each K-Factor system can be determined according to equation (2).

$$Ts(K) = 1 / (bl(K) * f0) \qquad (2)$$

For applications with a demand for low energy consumption and short symbol rates, the second radio device UE may only comprise processing chains with a high K-Factor, particularly a K-factor K greater than 1.

The following equations (3) to (6) show that the modulation and demodulation scheme proposed in this description still provides that the subcarriers are orthogonal. Equation (3) provides the forward Fast Fourier Transform FFT_R of block length R with the parameter k. In equation (4) the right hand term is separated into two components X_I and X_II each representing Fast Fourier Transforms. Equation (5) comprises a parameter transform from parameter k of equation (4) to the parameter 2*u. Equation (6) represents equation (5) in a rewritten form. Equations (5) and (6) provide two fourier transforms XI(u) and XII(u) with a block length of R/2 in comparison with the Fast Fourier Transform of block length R in equations (3) and (4). Consequently, subcarrier orthogonality is maintained while FFT block lengths are used that comply with the K-factor scheme described in equation (1).

$$FFT_R(k) = \sum_{n=0}^{R-1} x(n) * e^{-j\frac{2\pi}{R}kn}$$

$$(3)$$

$$FFT_R(k) = \underbrace{\sum_{r=0}^{\frac{R}{2}-1} x(r) * e^{-j\frac{2\pi}{R}kr}}_{X_I(k)} + \underbrace{\sum_{r=\frac{R}{2}}^{R-1} x(r) * e^{-j\frac{2\pi}{R}kr}}_{X_{II}(k)}$$

$$(4)$$

$$FFT_R(2u) = \underbrace{\sum_{r=0}^{\frac{R}{2}-1} x(r) * e^{-j\frac{2\pi}{R}2ur}}_{X_I(u)} + \underbrace{\sum_{r=\frac{R}{2}}^{R-1} x(r) * e^{-j\frac{2\pi}{R}2ur}}_{X_{II}(u)}$$

(5)

$$FFT_R(2u) = \underbrace{\sum_{r=0}^{\frac{R}{2}-1} x(r) * e^{-j\frac{2\pi}{\frac{R}{2}}ur}}_{X_I(u)} + \underbrace{\sum_{r=\frac{R}{2}}^{R-1} x(r) * e^{-j\frac{2\pi}{\frac{R}{2}}ur}}_{X_{II}(u)}$$

(6)

The following table 1 shows possible configurations for processing chains of the OFDM-modulator 1000 and the OFDM-demodulator 2000.

Table 1

| FFT Length | Num N of PRBs | K-Factor | N * K | Symbol Length in $\mu$s | Bandwidth | Integration in LTE 20MHz |
|---|---|---|---|---|---|---|
| 16 | 1 | 128 | 128 | 0,5 | 23,04MHz | No |
| 32 | 1 | 64 | 64 | 1, 0 | 11,52MHz | Yes |
| 64 | 1 | 32 | 32 | 2,1 | 5,76MHz | Yes |
|  | 2 |  | 64 |  | 11,52MHz |  |
|  | 3 |  | 96 |  | 17,28MHz |  |
| 128 | 1 | 16 | 16 | 4,2 | 2,88MHz | Yes |
|  | 2 |  | 32 |  | 5,76MHz |  |
|  | 3 |  | 48 |  | 8,64MHz |  |
|  | 4 |  | 64 |  | 11,52MHz |  |
|  | 5 |  | 80 |  | 14,40MHz |  |
|  | 6 |  | 96 |  | 17,28MHz |  |
| 256 | 1 | 8 | 8 | 8,33 | 1,44MHz | Yes |
|  | 2 |  | 16 |  | 2,88MHz |  |
|  | 3 |  | 24 |  | 4,32MHz |  |
|  | 4 |  | 32 |  | 5,76MHz |  |
|  | 5 |  | 40 |  | 7,20MHz |  |
|  | 6 |  | 48 |  | 8,64MHz |  |
|  | 7 |  | 56 |  | 10,08MHz |  |
|  | 8 |  | 64 |  | 11,52MHz |  |
|  | 9 |  | 72 |  | 12,96MHz |  |
|  | 10 |  | 80 |  | 14,40MHz |  |
|  | 11 |  | 88 |  | 15,84MHz |  |
|  | 12 |  | 96 |  | 17,28MHz |  |
| 512 | 1 | 4 | 4 | 16,65 | 0,72MHz | Yes |
|  | 2 |  | 8 |  | 1,44MHz |  |
|  | 3 |  | 12 |  | 2,16MHz |  |
|  | 4 |  | 16 |  | 2,88MHz |  |
|  | 5 |  | 20 |  | 3,60MHz |  |

(continued)

| FFT Length | Num N of PRBs | K-Factor | N * K | Symbol Length in μs | Bandwidth | Integration in LTE |
|---|---|---|---|---|---|---|
| | 6 | | 24 | | 4,32MHz | |
| | 7 | | 28 | | 5,04MHz | |
| | 8 | | 32 | | 5,76MHz | |
| | 9 | | 36 | | 6,48MHz | |
| | 10 | | 40 | | 7,20MHz | |
| | 11 | | 44 | | 7,92MHz | |
| | 12 | | 48 | | 8,64MHz | |
| | 13 | | 52 | | 9,36MHz | |
| | 14 | | 56 | | 10,08MHz | |
| | 15 | | 60 | | 10,80MHz | |
| | 16 | | 64 | | 11,52MHz | |
| | 17 | | 68 | | 12,24MHz | |
| | 18 | | 72 | | 12,96MHz | |
| | 19 | | 76 | | 13,68MHz | |
| | 20 | | 80 | | 14,40MHz | |
| | 21 | | 84 | | 15,12MHz | |
| | 22 | | 88 | | 15,84MHz | |
| | 23 | | 92 | | 16,56MHz | |
| | 24 | | 96 | | 17,28MHz | |
| | 25 | | 100 | | 18,00MHz | |
| 1024 | 1 | 2 | 2 | 33,3 | 0,36MHz | Yes |
| | 2 | | 4 | | 0,72MHz | |
| | 3 | | 6 | | 1,08MHz | |
| | 4 | | 8 | | 1,44MHz | |
| | 5 | | 10 | | 1,80MHz | |
| | 6 | | 12 | | 2,16MHz | |
| | 7 | | 14 | | 2,52MHz | |
| | 8 | | 16 | | 2,88MHz | |
| | 9 | | 18 | | 3,24MHz | |
| | 10 | | 20 | | 3,60MHz | |
| | 11 | | 22 | | 3,96MHz | |
| | 12 | | 24 | | 4,32MHz | |
| | 13 | | 26 | | 4,68MHz | |
| | 14 | | 28 | | 5,04MHz | |
| | 15 | | 30 | | 5,40MHz | |
| | 16 | | 32 | | 5,76MHz | |
| | 17 | | 34 | | 6,12MHz | |
| | 18 | | 36 | | 6,48MHz | |
| | 19 | | 38 | | 6,84MHz | |
| | 20 | | 40 | | 7,20MHz | |
| | 21 | | 42 | | 7,56MHz | |
| | 22 | | 44 | | 7, 92MHz | |
| | 23 | | 46 | | 8,28MHz | |
| | 24 | | 48 | | 8,64MHz | |
| | 25 | | 50 | | 9,00MHz | |
| LTE: 2048 | 1 ... 100 | 1 | 1 ... 100 | 66,6 | 0, 18...18MHz | Yes |

The wording ingress and egress has the meaning that the respective ingress symbol stream is located toward an input side of the processing chain and that the egress symbol stream is located toward an output side of the processing chain. Therefore, the ingress symbol stream may differ from an actual input symbol stream at the beginning of the processing chain. The same applies to the egress symbol stream.

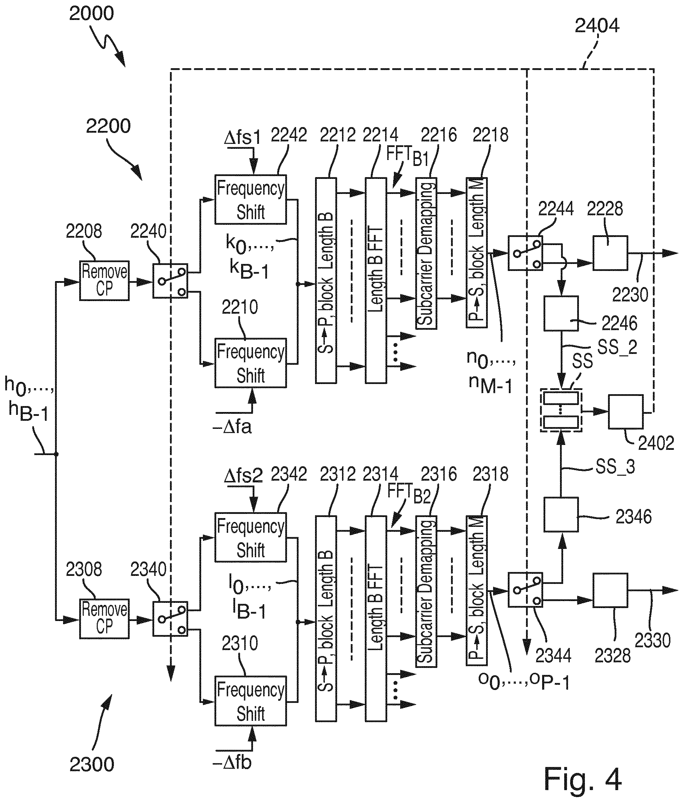

The serial-to parallel-converters and the parallel-to-serial converters in figure 3 and 4 are arranged at an exemplary position. Of course these converters can be arranged at other positions to optimize the respective processing chain.

Figure 4 shows a schematic block diagram of the OFDM-demodulator 2000. The first processing chain 2200 is described in detail. After removing the cyclic prefix CP the down-converted sample stream $h_0,...,h_{B-1},...$ is applied to a switch 2240. According to the shown state of the switch 2240 a frequency shifter 2242 determines a frequency shifted instance of the down-converted sample stream $h_0,...,h_{B-1},...$ in the sense of the first ingress sample stream $k_0,...,k_{B-1}$ in dependence on the first synchronization frequency offset $\Delta fs1$. The first egress sample stream $n_0,...,n_{M-1}$ is applied to a switch 2244. According to the shown state of the switch 2244 an extractor 2246 extracts a synchronization symbol SS_2 at a fixed position and of fixed size in the first egress sample stream $n_0,...,n_{M-1}$.

The second processing chain 2300 is configured to operate with a second synchronization frequency offset $\Delta fs2$ to extract a synchronization symbol SS_3 by means of the extractor 2346. Of course, further processing chains operating with a different synchronization frequency offset provide further synchronization symbols to concatenate the synchronization symbols SS_2 to SS_3 resulting in the synchronization sequence SS. The synchronization sequence SS is supplied to the correlator 2402 which compares the determined synchronization sequence SS with a a-priori known synchronization sequence. If the determined synchronization sequence SS highly correlates to the a-priori known synchronization sequence, the correlator 2402 generates a signal 2404 for signalling that the radio device UE acquired synchronization to the cell C within the network RCN.

The position of the switches 2240, 2340, 2244 and 2344 shown in figure 4 is shown in a non-synchronized state of the OFDM-demodulator 2000. The switches 2240, 2340, 2244 and 2344 receive the signal 2404 and are operated to switch to a synchronized switch position. In this synchronized switch position / in the synchronized state the respective processing chains a) apply a different frequency offsets-$\Delta fa$, -$\Delta fb$ to the down-converted sample stream $h_0,...,h_{B-1},...$; and b) determine egress data streams 2230, 2330 comprising first and second control or payload data in dependence on a third and fourth egress sample stream $n_0,...,n_{M-1}$, $o_0,...,o_{P-1}$, respectively.

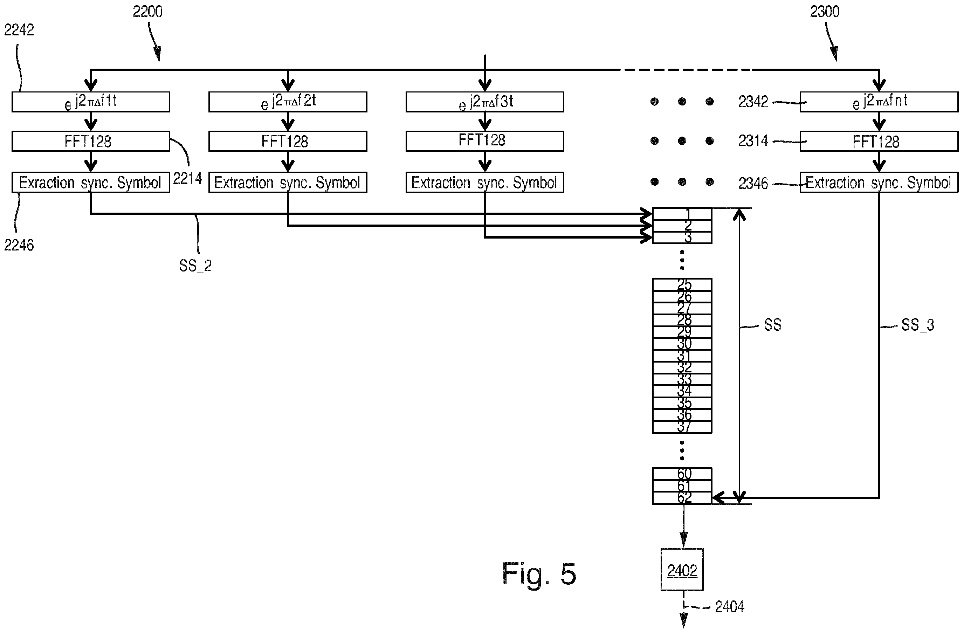

Figure 5 shows a schematic block diagram of the OFDM-demodulator 2000 in a non-synchronized state. The processing chains 2200 to 2300 are operated to extract a number of 62 synchronization symbols SS_2 to SS_3 and concatenate the plurality of 62 synchronization symbols to the synchronization sequence SS. The synchronization sequence SS is applied to the correlator 2402 to determine the signal 2404. If no synchronization sequence is detected the OFDM-demodulator 2000 remains in its unsynchronized state.

The synchronization sequence SS and the corresponding synchronization signal is determined on transmitter side according to 3GPP 36.211 section 6.11, and is mapped to 62 subcarriers around the DC carrier to the third and seventh of the (largest) OFDM-symbol of an OFDM-frame. Of course, other forms of synchronization sequences can be detected with the methods proposed in this description. In particular synchronization sequences modulated with an IFFT block length greater than the FFT block length of the OFDM-demodulator 2000 can be reconstructed.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

**1.** An OFDM-demodulator (2000) for operating in a device (BS; UE) of a radio communications network (RCN), wherein the OFDM-demodulator (2000) comprises a processor (P1; P2) and a memory (M1; M2) being configured to:

- receive a down-converted sample stream ($h_0$,...,$h_{B-1}$,...);
- determine at least a first and second ingress sample stream ($k_0$,...,$k_{B-1}$, $l_0$,...,$l_{B-1}$) of the down-converted sample stream ($h_0$,...,$h_{B-1}$,...) of same block length (B) and of different frequency offsets ($\Delta fs1$, $\Delta fs2$), respectively;
- determine a first and second forward Fast Fourier Transform ($FFT_{B1}$, $FFT_{B2}$) of the same block length (B) in dependence on the first and second ingress sample stream ($k_0$,...,$k_{B-1}$, $l_0$,...,$l_{B-1}$), respectively;
- determine a first and second egress sample stream ($n_0$,...,$n_{M-1}$, $o_0$,...,$o_{P-1}$) in dependence on the first and second forward Fast Fourier Transform ($FFT_{B1}$, $FFT_{B2}$), respectively; and
- determine a synchronization sequence (SS) in dependence on the first and second egress sample stream ($n_0$,...,$n_{M-1}$, $o_0$,...,$o_{P-1}$).

2. The OFDM-demodulator (2000) according to claim 1, wherein the determination of the synchronization sequence (SS) comprises:

- determining a component of the synchronization sequence (SS) from a fixed position in the egress sample stream, respectively; and
- determining the synchronization sequence (SS) by concatenating the components of the synchronization sequence (SS).

3. The OFDM-demodulator (2000) according to claim 1 or 2,

- wherein the received down-converted ingress sample stream ($h_0$,...,$h_{B-1}$,...) comprises a synchronization signal (PSS; SSS) which has been modulated with a main block length (A); and
- wherein the same block length (B) of the first and second forward Fast Fourier Transforms ($FFT_{B1}$, $FFT_{B2}$) multiplied with an integer factor (K) equals the main block length (A).

4. The OFDM-demodulator (2000) according to claim 3,

- wherein the main block length (A) equals 2048.

5. The OFDM-demodulator (2000) according to claim 3 or 4,

- wherein the same block length equals 128, and
- wherein the synchronization sequence (SS) comprises 62 synchronization symbols.

6. The OFDM-demodulator (2000) according to one of the preceding claims, wherein the processor (P2) and the memory (M2) are further configured to:

- determine a successful detection of the synchronization sequence (SS);
- receive the down-converted sample stream ($h_0$,...,$h_{B-1}$,...) comprising first and second control or payload data;
- determine at least a third and fourth ingress sample stream ($k_0$,..., $k_{B-1}$, $l_0$,...,$l_{B-1}$) of the down-converted sample stream ($h_0$,...,$h_{B-1}$,...) of same block length (B) and of different further frequency offsets ($\Delta fa$, $\Delta fb$), respectively;
- determine a third and fourth forward Fast Fourier Transform ($FFT_{B1}$, $FFT_{B2}$) of the same block length (B) in dependence on the third and fourth ingress sample stream ($k_0$,...,$k_{B-1}$, $l_0$,...,$l_{B-1}$), respectively;
- determine a third and fourth egress sample stream ($n_0$,...,$n_{M-1}$, $o_0$,...,$o_{P-1}$) in dependence on the first and second forward Fast Fourier Transform ($FFT_{B1}$, $FFT_{B2}$), respectively; and
- determine first and second control or payload data in dependence on the third and fourth egress sample stream ($n_0$,...,$n_{M-1}$, $o_0$,...,$o_{P-1}$), respectively.

7. A radio device (UE) for operating in a radio communications network (RCN), wherein the radio device (UE) comprises the OFDM-demodulator (2000) according to one of the preceding claims, wherein the radio device (UE) comprises a radio module (R2) and an antenna (A2) being configured to:

- receive a radio signal from a radio channel (ch2);
- down-convert the radio signal to the sample stream ($h_0$,...,$h_{A-1}$,...).

8. A method to operate an OFDM-demodulator (2000) for operating in a device (BS; UE) of a radio communications network (RCN), wherein the method comprises:

- receiving a down-converted sample stream $(h_0,...,h_{B-1},...)$;
- determining at least a first and second ingress sample stream $(k_0,...,k_{B-1}, l_0,...,l_{B-1})$ of the down-converted sample stream $(h_0,....,h_{B-1},...)$ of same block length (B) and of different frequency offsets $(\Delta fs1, \Delta fs2)$, respectively;
- determining a first and second forward Fast Fourier Transform $(FFT_{B1}, FFT_{B2})$ of the same block length (B) in dependence on the first and second ingress sample stream $(k_0,...,k_{B-1}, l_0,...,l_{B-1})$, respectively;
- determining a third and fourth egress sample stream $(n_0,...,n_{M-1}, o_0,...,o_{P-1})$ in dependence on the first and second forward Fast Fourier Transform $(FFT_{B1}, FFT_{B2})$, respectively; and
- determining a synchronization sequence (SS) in dependence on the first and second egress sample stream $(n_0,...,n_{M-1}, o_0,...,o_{P-1})$.

**Patentansprüche**

1. OFDM-Demodulator (2000) für Betrieb in einem Gerät (BS; UE) eines Funkkommunikationsnetzes (RCN), wobei der OFDM-Demodulator (2000) einen Prozessor (P1; P2) und einen Speicher (M1; M2) umfasst, die für Folgendes ausgelegt sind:

- Empfangen eines downkonvertierten Probenstroms $(h_0,..., h_{B-1},...)$;
- Bestimmen von mindestens einem ersten und zweiten Ingress-Probenstrom $(k_0,..., k_{B-1}, l_0,...,l_{B-1})$ des downkonvertierten Probenstroms $(h_0,..., h_{B-1},...)$ von jeweils der gleichen Blocklänge (B) und unterschiedlichen Frequenzversätzen $(\Delta fs1, \Delta fs2)$;
- Bestimmen einer ersten und zweiten vorderen Fast-Fourier-Transformation $(FFT_{B1}, FFT_{B2})$ der gleichen Blocklänge (B) in Abhängigkeit von jeweils dem ersten und zweiten Ingress-Probenstrom $(k_0,..., k_{B-1}, l_0,...,l_{B-1})$;
- Bestimmen eines ersten und zweiten Egress-Probenstroms $(n_0,..., n_{M-1}, o_0,..., o_{P-1})$ in Abhängigkeit von jeweils der ersten und zweiten vorderen Fast-Fourier-Transformation $(FFT_{B1}, FFT_{B2})$; und
- Bestimmen einer Synchronisationssequenz (SS) in Abhängigkeit von dem ersten und zweiten Egress-Probenstrom $(n_0,..., n_{M-1}, o_0,...,o_{P-1})$.

2. OFDM-Demodulator (2000) gemäß Anspruch 1, wobei die Bestimmung der Synchronisationssequenz (SS) Folgendes umfasst:

- Bestimmen einer Komponente der Synchronisationssequenz (SS) jeweils von einer fixierten Position in dem Egress-Probenstrom; und
- Bestimmen der Synchronisationssequenz (SS) durch Verketten der Komponenten der Synchronisationssequenz (SS).

3. OFDM-Demodulator (2000) gemäß Anspruch 1 oder 2,

- wobei der empfangene downkonvertierte Ingress-Probenstrom $(h_0,..., h_{B-1},...)$ ein Synchronisationssignal (PSS; SSS) umfasst, das mit einer Hauptblocklänge (A) moduliert worden ist; und
- wobei die gleiche Blocklänge (B) der ersten und zweiten vorderen Fast-Fourier-Transformationen $(FFT_{B1}, FFT_{B2})$, mit einem Ganzzahlfaktor (K) multipliziert, gleich der Hauptblocklänge (A) ist.

4. OFDM-Demodulator (2000) gemäß Anspruch 3,

- wobei die Hauptblocklänge (A) gleich 2048 ist.

5. OFDM-Demodulator (2000) gemäß Anspruch 3 oder 4,

- wobei die gleiche Blocklänge gleich 128 ist, und
- wobei die Synchronisationssequenz (SS) 62 Synchronisationssymbole umfasst.

6. OFDM-Demodulator (2000) gemäß einem der vorhergehenden Ansprüche, wobei der Prozessor (P2) und der Speicher (M2) ferner für Folgendes ausgelegt sind:

- Bestimmen einer erfolgreichen Erkennung der Synchronisationssequenz (SS);
- Empfangen des downkonvertierten Probenstroms ($h_0$,..., $h_{B-1}$,...), der erste und zweite Steuerdaten oder Nutzdaten umfasst;
- Bestimmen von mindestens einem dritten und vierten Ingress-Probenstrom ($k_0$,..., $k_{B-1}$, $l_0$,..., $l_{B-1}$) des downkonvertierten Probenstroms ($h_0$,..., $h_{B-1}$,...) von jeweils der gleichen Blocklänge (B) und unterschiedlichen Frequenzversätzen ($\Delta$fa, $\Delta$fb);
- Bestimmen einer dritten und vierten vorderen Fast-Fourier-Transformation ($FFT_{B1}$, $FFT_{B2}$) der gleichen Blocklänge (B) in Abhängigkeit von jeweils dem dritten und vierten Ingress-Probenstrom ($k_0$,..., $k_{B-1}$, $l_0$,..., $l_{B-1}$);
- Bestimmen eines dritten und vierten Egress-Probenstroms ($n_0$,..., $n_{M-1}$, $o_0$,..., $o_{P-1}$) in Abhängigkeit von jeweils der ersten und zweiten vorderen Fast-Fourier-Transformation ($FFT_{B1}$, $FFT_{B2}$); und
- Bestimmen der ersten und zweiten Steuerdaten oder Nutzdaten in Abhängigkeit von jeweils dem dritten und vierten Egress-Probenstrom ($n_0$,..., $n_{M-1}$, $o_0$,..., $o_{P-1}$).

7. Funkgerät (UE) für Betrieb in einem Funkkommunikationsnetz (RCN), wobei das Funkgerät (UE) den OFDM-Demodulator (2000) gemäß einem der vorhergehenden Ansprüche umfasst, wobei das Funkgerät (UE) ein Funkmodul (R2) und eine Antenne (A2) umfasst, die für Folgendes ausgelegt sind:

   - Empfangen eines Funksignals von einem Funkkanal (ch2);
   - Downkonvertieren des Funksignals auf den Probenstrom ($h_0$,..., $h_{A-1}$,...).

8. Verfahren zum Betreiben eines OFDM-Demodulators (2000) für Betrieb in einem Gerät (BS; UE) eines Funkkommunikationsnetzes (RCN), wobei das Verfahren Folgendes umfasst:

   - Empfangen eines downkonvertierten Probenstroms ($h_0$,..., $h_{B-1}$,...)
   - Bestimmen von mindestens einem ersten und zweiten Ingress-Probenstrom ($k_0$,..., $k_{B-1}$, $l_0$,..., $l_{B-1}$) des downkonvertierten Probenstroms ($h_0$,..., $h_{B-1}$,...) von jeweils der gleichen Blocklänge (B) und unterschiedlichen Frequenzversätzen ($\Delta$fs1, $\Delta$fs2);
   - Bestimmen einer ersten und zweiten vorderen Fast-Fourier-Transformation ($FFT_{B1}$, $FFT_{B2}$) der gleichen Blocklänge (B) in Abhängigkeit von jeweils dem ersten und zweiten Ingress-Probenstrom ($k_0$,..., $k_{B-1}$, $l_0$,..., $l_{B-1}$);
   - Bestimmen eines dritten und vierten Egress-Probenstroms ($n_0$,..., $n_{M-1}$, $o_0$,..., $o_{P-1}$) in Abhängigkeit von jeweils der ersten und zweiten vorderen Fast-Fourier-Transformation ($FFT_{B1}$, $FFT_{B2}$); und
   - Bestimmen einer Synchronisationssequenz (SS) in Abhängigkeit von dem ersten und zweiten Egress-Probenstrom ($n_0$,..., $n_{M-1}$, $o_0$,..., $o_{P-1}$).

## Revendications

1. Démodulateur OFDM (2000) capable de fonctionner dans un dispositif (BS ; UE) d'un réseau de communication radio (RCN), le démodulateur OFDM (2000) comprenant un processeur (P1 ; P2) et une mémoire (M1 ; M2) configurés pour :

   - recevoir un flux échantillon soumis à conversion descendante ($h_0$, ..., $h_{B-1}$, ...) ;
   - déterminer au moins des premier et deuxième flux échantillons d'entrée ($k_0$, ..., $k_{B-1}$, $l_0$, ..., $l_{B-1}$) du flux échantillon soumis à conversion descendante ($h_0$, ..., $h_{B-1}$, ...) de longueur de bloc (B) identique et de décalages de fréquence ($\Delta$fs1, $\Delta$fs2) différents, respectivement ;
   - déterminer des première et deuxième transformées de Fourier rapides directes ($FFT_{B1}$, $FFT_{B2}$) de la longueur de bloc (B) identique en fonction des premier et deuxième flux échantillons d'entrée ($k_0$, ..., $k_{B-1}$, $l_0$, ..., $l_{B-1}$), respectivement ;
   - déterminer des premier et deuxième flux échantillons de sortie ($n_0$, ..., $n_{M-1}$, $o_0$, ..., $o_{P-1}$) en fonction des première et deuxième transformées de Fourier rapides directes ($FFT_{B1}$, $FFT_{B2}$), respectivement ; et
   - déterminer une séquence de synchronisation (SS) en fonction des premier et deuxième flux échantillons de sortie ($n_0$, ..., $n_{M-1}$, $o_0$, ..., $o_{P-1}$).

2. Démodulateur OFDM (2000) selon la revendication 1, dans lequel la détermination de la séquence de synchronisation (SS) comprend :

   - la détermination d'une composante de la séquence de synchronisation (SS) à une position fixe du flux échantillon de sortie, respectivement ; et

- la détermination de la séquence de synchronisation (SS) par la concaténation des composantes de la séquence de synchronisation (SS) .

3. Démodulateur OFDM (2000) selon la revendication 1 ou 2,

- dans lequel le flux échantillon d'entrée soumis à conversion descendante ($h_0$, ..., $h_{B-1}$, ...) reçu comprend un signal de synchronisation (PSS ; SSS) qui a été modulé avec une longueur de bloc principale (A) ; et
- dans lequel la longueur de bloc (B) identique des première et deuxième transformées de Fourier rapides directes ($FFT_{B1}$, $FFT_{B2}$) multipliée par un facteur entier (K) est égale à la longueur de bloc principale (A).

4. Démodulateur OFDM (2000) selon la revendication 3,

- dans lequel la longueur de bloc principale (A) est égale à 2048.

5. Démodulateur OFDM (2000) selon la revendication 3 ou 4,

- dans lequel la longueur de bloc identique est égale à 128, et
- dans lequel la séquence de synchronisation (SS) comprend 62 symboles de synchronisation.

6. Démodulateur OFDM (2000) selon une des revendications précédentes, dans lequel le processeur (P2) et la mémoire (M2) sont également configurés pour :

- déterminer la réussite de la détection de la séquence de synchronisation (SS) ;
- recevoir le flux échantillon soumis à conversion descendante ($h_0$, ..., $h_{B-1}$, ...) comprenant des premières et deuxièmes données de commande ou de charge utile ;
- déterminer au moins des troisième et quatrième flux échantillons d'entrée ($k_0$, ..., $k_{B-1}$, $l_0$, ..., $l_{B-1}$) du flux échantillon soumis à conversion descendante ($h_0$, ..., $h_{B-1}$, ...) de longueur de bloc (B) identique et de décalages de fréquence ($\Delta fa$, $\Delta fb$) autres et différents, respectivement ;
- déterminer des troisième et quatrième transformées de Fourier rapides directes ($FFT_{B1}$, $FFT_{B2}$) de la longueur de bloc (B) identique en fonction des troisième et quatrième flux échantillons d'entrée ($k_0$, ..., $k_{B-1}$, $l_0$, ..., $l_{B-1}$), respectivement ;
- déterminer des troisième et quatrième flux échantillons de sortie ($n_0$, ..., $n_{M-1}$, $o_0$, ..., $o_{P-1}$) en fonction des première et deuxième transformées de Fourier rapides directes ($FFT_{B1}$, $FFT_{B2}$), respectivement ; et
- déterminer des premières et deuxièmes données de commande ou de charge utile en fonction des troisième et quatrième flux échantillons de sortie ($n_0$, ..., $n_{M-1}$, ..., $o_0$, ..., $o_{P-1}$), respectivement.

7. Dispositif radio (UE) capable de fonctionner dans un réseau de communication radio (RCN), le dispositif radio (UE) comprenant le démodulateur OFDM (2000) selon une des revendications précédentes, le dispositif radio (UE) comprenant un module radio (R2) et une antenne (A2) configurés pour :

- recevoir un signal radio d'un canal radio (ch2) ;
- soumettre à conversion descendante le signal radio pour produire le flux échantillon ($h_0$, ..., $h_{A-1}$, ...).

8. Procédé d'utilisation d'un démodulateur OFDM (2000) capable de fonctionner dans un dispositif (BS ; UE) d'un réseau de communication radio (RCN), le procédé comprenant :

- la réception d'un flux échantillon soumis à conversion descendante ($h_0$, ..., $h_{B-1}$, ...) ;
- la détermination d'au moins des premier et deuxième flux échantillons d'entrée ($k_0$, ..., $k_{B-1}$, $l_0$, ..., $l_{B-1}$) du flux échantillon soumis à conversion descendante ($h_0$, ..., $h_{B-1}$, ...) de longueur de bloc (B) identique et de décalages de fréquence ($\Delta fs1$, $\Delta fs2$) différents, respectivement ;
- la détermination de première et deuxième transformées de Fourier rapides directes ($FFT_{B1}$, $FFT_{B2}$) de la longueur de bloc (B) identique en fonction des premier et deuxième flux échantillons d'entrée ($k_0$, ..., $k_{B-1}$, $l_0$, ..., $l_{B-1}$), respectivement ;
- la détermination de troisième et quatrième flux échantillons de sortie ($n_0$, ..., $n_{M-1}$, $o_0$, ..., $o_{P-1}$) en fonction des première et deuxième transformées de Fourier rapides directes ($FFT_{B1}$, $FFT_{B2}$), respectivement ; et
- la détermination d'une séquence de synchronisation (SS) en fonction des premier et deuxième flux échantillons de sortie ($n_0$, ..., $n_{M-1}$, $o_0$, ..., $o_{P-1}$).

Fig. 1a

2800

2802 — receiving a down-converted sample stream

2804 — determining at least a first and second ingress sample stream of the down-converted sample stream of same block length and of different frequency offsets, respectively

2806 — determining a first and second forward Fast Fourier Transform of the same block length in dependence on the first and second ingress sample stream, respectively

2808 — determining a third and fourth egress sample stream in dependence on the first and second forward Fast Fourier Transform, respectively

2810 — determining a synchronization sequence in dependence on the first and second egress sample stream

Fig. 1b

Fig. 2

Fig. 3

Fig. 4

Fig. 5

EP 3 337 116 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANIA SESIA.** *LTE - the UMTS long term evolution : from theory to practice ; [Including release 10 for LTE-advanced*

- *3GPP TS36.211 V14.00,* September 2016